(19) Europäisches Patentamt
European Patent Office
Office européen des brevets

(11) **EP 2 472 397 A1**

(12) **EUROPEAN PATENT APPLICATION**

(43) Date of publication:
**04.07.2012 Bulletin 2012/27**

(51) Int Cl.:
***G06F 9/50*** (2006.01)

(21) Application number: **10197106.7**

(22) Date of filing: **28.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **POLYTEDA Software Corporation Limited**
**3105 Limassol (CY)**

(72) Inventors:
• **Marchuk, Volodymyr**
  **Toronto Ontario M6S1Z3 (CA)**

• **Mudla, Andriy**
  **04074 Kyiv (UA)**
• **Brytova, Olena**
  **03194, Kyiv (UA)**
• **Mykytenko, Sergii**
  **03190, Kyiv (UA)**

(74) Representative: **Benatov, Emil Gabriel et al**
**Dr. Emil Benatov and partners**
**Bl. 36B, Liuliakova gradina Street**
**1113 Sofia (BG)**

(54) **Load distribution scheduling method in data processing system**

(57)     1. The method in data processing system is applicable in parallel data processing systems. The load distribution scheduling method in data processing system is performed in the following order on the figure. Unlike to the static distribution - this method allows to avoid the accumulation of errors in defining the tasks' estimation of the task relative complexity and thus - to balance the load between the machines. This allows reducing the total time of the task performance (the initial task list). The method can be implemented in the form of the independent program module or the program library. The computational equipment range that can perform this method is very broad - from the multi-core PC to the cluster systems.

EP 2 472 397 A1

## Description

## FIELD OF THE INVENTION

Load distribution scheduling method in data processing system is applicable in parallel data processing systems.

## DESCRIPTION OF THE RELATED ART

The known method scalable scheduling of tasks in heterogeneous systems with leak of information about the complexity of primal tasks [CA2631255A1], that is based upon the estimation of the average completion time of the task. The algorithm of the known method is to perform the following:

> **Preparing of the data:** first, the check is performed. For this purpose - the following actions are performed: Average Estimated Completion Time (AECT) is calculated; to calculate the AECT the following steps are needed:
>
>> Identify and fetch available tasks. During this step choosing of tasks, received for execution is performed from the task list. Estimate run times of tasks.
>> During this step - the time for each task is estimated; Calculate AECT for each task.

**The forming of the output set of tasks, subject to their AECT**: Sort tasks according to AECT. Produce set of ordered tasks.

**Distribution of tasks**: for this purpose - there are sequential number of steps. **To chose the machine and tasks.** Identify task with lowest AECT and all available machines. Identify machine with lowest AECT, and also of all available machines. Identify the machine with the lowest amount of AECT of the given tasks.

**Assign identified task to identified machine**. Assign of the task with the lowest AECT to the machine with the lowest total AECT.

**Delete the task from the output set, correction of the total AECT for the chosen machine.**

Delete the assigned task from task list. Update estimated completion time of the identified machine.

**Initial set check**. If after the above-listed actions there are no tasks found (724 - More tasks left in task list?) - the cycle starts from the very beginning, otherwise - 714 - Identify task with smallest AECT and all available machines.

The content of the known method:

> Initial set of tasks $Q_0$ exists.
> Each of the tasks from $Q_0$ is characterized by the AECT.

Some subset of tasks $C_i$ that satisfies next condition is isolated from

$Q_0$ for each valuator (machine from the data processing system) :

$ECT_{C1} \approx ECT_{C2} \approx ECT_{Cn}$, were n is machines number.

Thereby, after the work of the known method is complete, each of the machines will **get** a sub set of the tasks.

The imperfection of the known method of load distribution scheduling method in data processing system is that it can give god results if it is possible to estimate AECT accurately. However, there are application tasks (in particular Design rule checking) were accurate estimation of AECT is impossible or requires great amount of additional resources. Also planner work accuracy depends on the accuracy of AECT estimation. Practice shows that with increasing power $C_i$ accumulation of errors occurs, which leads to computational load disbalance and total work time rise (execution of tasks from $Q_0$ ).

For subset $C_i$ error $err_i$ will be equal to:

$$err_i = \sum err_{AECT}$$

Where $err_{AECT}$ - tasks AECT estimation errors (from $C_i$ )

Errors $err_{AECT}$ are often systemic, thus they are unilateral that's why error compensation inside $C_i$ is not possible.

Planner error for the known method will be equal to the maximum value of $err_i$ and it can not be minimized during the tasks assignment because $C_i$ = is formed before starting the calculation.

The known method of Load distribution scheduling in data processing system intents AECT correction using data received by the previous runs of $Q_0$. It is not always acceptable, because this method does not take into account that:

- For large tasks run time can be large, hence reducing the run time of the first run gives time saving;
- It is not always necessary to rerun $Q_0$
- It is assumed that application task changes from run to run do not influence AECT tasks.

## SUMMARY OF THE INVENTION

The task of the load distribution scheduling method in data processing system is to reduce the number of errors in the planning in the conditions of the lack of valid information about the labor-output ratio of the initial tasks, where the precise estimation of the AECT of the tasks is impossible.

This problem is solved with the help of the load distribution scheduling method in data processing system. It is performed in the following order, after the start action 1 is performed - Identify and fetch available tasks. Also, if required - the following actions are performed: 8 - More tasks left in task list, 11 -Assign identified task to identified machine and 12 - Delete the assigned task from task list with the only difference, that after 1 - Identify and fetch available tasks, sequentially performed 2 - estimation of the task relative complexity (TRC) 3 - sorting of the initial set of tasks with their TRC, 4 - Identify available machines, after witch goes the check of the condition 5 - the number of running drivers - the number of available machines. If not - 6 is performed - run the machines driver, if yes - the second check is on 7 - have all drivers complete the work? If yes - the work of the method is over, if not - the work goes on, and 6 (run the machines driver) - runs sequentially Driver1 to Driver N, at that, the next driver is ran after the previous has started the work, and each driver after the start makes a check 8 More tasks in task list? - if yes - 10 is performed - chose the task from the task list, if no - 9 sending a message. The message is sent to (7-have all the drivers complete the work?) about the completion of the driver's work, after which the driver ends its work, and after 10 - choosing of the task. The task is chosen with the help of 11 - the task is sent to the machine for the run - starts running, then sequentially performed 12 - deleting the chosen task from the initial list of tasks and 13 - awaiting for the completion of the chosen task, thereby, after the completion of the task follows the check of the result of the task's performance. 14 - has the task complete successfully? If yes - the cycle goes on from the 8 More tasks in task list - there is a choice and performance of the next task, if no - the task was complete with an error - the error is analyzed - 15 - is this error critical? - if no - the error can be removed by re-running the task by another driver - the 17 is performed - the roll-back of the task, thereby, the task is set back to the initial list of tasks, for the further processing with the other driver (machine), and of the error is critical - 16 is performed - sending the message to 7 - have all the drivers complete the work?, about the completion of the driver's work, after which the driver ends it's work) and - during the distribution of the driver's load - driver efficiency is taken into account, drivers with the higher efficiency receive more complex tasks, drivers with lower efficiency - less complex tasks, at that - the following tasks are distributed dynamically, as far as the previous tasks are completed, in order to minimize the error of the labor output ratio assessment and to reduce the total time of the task performance - the output set of tasks or the task list.

**BRIEF DESCRIPTION OF THE SEVERAL VIEWS OF THE**

**DRAWING**

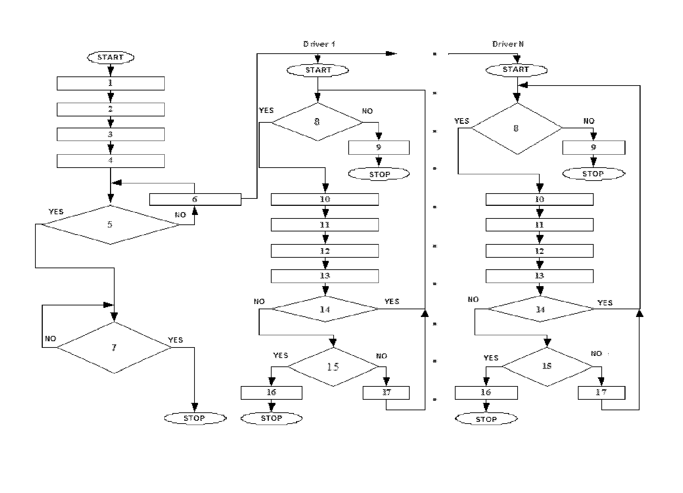

More detailed this invention is illustrated on the figure - scheme of the algorithm for performing the load distribution scheduling method in data processing system.

**DETAILED DESCRIPTION OF THE INVENTION**

The load distribution scheduling method in data processing system is performed in the following order:

After the start, the following actions are performed sequentially:

1. During this step the task, obtained from the user is processed and as a result - the initial set of tasks is formed.

2. During this step the TRC is defined. The assessment is based upon the analysis of the initial data. The necessary condition of the assessment is the defining the relations "more" or "less" between the tasks from the list.

3. Sorting the initial list of tasks according to their TRC.

4. Defining the available computational resources. On this stage the local network is being scanned in order to find the available hosts. Then, the quantity of available (allowed to use) processors (cores) on each found host is defined. In result of 4 the set of computational resources is defined. Machines drivers are run next, one driver for each valuator (processor). Drivers start performs the following steps

5. The check if the quantity of the ran drivers equals to the quantity of the available machines. If no - 6 is performed - run the machines driver.

6. Run the machines driver. When all drivers are running (follow the 5 condition - the quantity of the ran drivers equals to the quantity of the available machines?), the monitoring of the driver's 7 - Have all the drivers complete the work? condition is ON.

7. Have all the drivers complete the work? Gathers and analyzes the messages, received from the drivers. The main condition of the monitoring work to be complete is getting the messages about the work completion from all the drivers. 7 - have all the driver complete the work? - also analyzes the condition of the task performed in general. After the completion of the 7 have all the driver complete the work? - the method ends it's work. The user gets the information about the condition of the task (success\error) and the data (the result of the work).

8. More tasks in task list? If the condition 8 more tasks in task list? - is not satisfied - this means, that the list of tasks is empty. Further 9 is performed

- sending the message to the monitoring - 7 - have all the driver complete the work? - the message about the successful completion of the driver's work - the driver stops it's work. If the condition 8 more tasks in task list? - is performed, this means, that the initial set of tasks still has unperformed tasks. Together with this - the tasks are blocked from the list of tasks, to avoid the conflicts between the competing drivers.

9. Sending the message to the monitoring - 7 - have all the driver complete the work? - the message about the successful completion of the driver's work - the driver stops it's work.
10. The task is chosen for the given driver. This choice is performed by the module - planner. Task selection criteria are:

$$\frac{P_1}{Q_1} \approx \frac{P_2}{Q_2} \ldots \approx \frac{P_n}{Q_n}$$

Where $P_n$ - the productivity of the ordinary machine, and $Q_n$ is the task complexity of the chosen task for it.
Further, the following actions are performed:
11. The task is transferred to the machine and ran.
12. The chosen task is deleted from the list of tasks. And the ran task is deleted from the initial set of tasks and the initial set of tasks is unblocked in order to get the tasks by other drivers.
13. Awaiting the end of the task performance

After the end of the chosen task processing, the analysis of the results of work of the machine is performed.

14. There is a check if the task was performed successfully. If yes - 8 More tasks in task list? - the driver chooses the next task. If not - (an error occurred) - the analyze of the error 15 is performed - is the error critical?

If not - i.e. the error is not critical - it can be solved by restarting the task, the 17 is performed - the task roll-back. The task gets the penalty point and is returned to the initial task list. If during this, the task has reached the limit of penalty points - the error is processed as critical. Then the driver chooses the next task.
If yes - the error is critical - and it can't be solved by restarting the task - 16 is performed - sending the message to the monitoring 7 - have all drivers complete the work? - about the end of the work due to an error and the driver stops its work.
The feature of this method is the dynamic distribution of the tasks between the set of computational resources.
This task is solved by step-by-step planning with the dynamic distribution of the tasks between the machines. The kernel of the method is in the following:

- it is first introduced the concept of Relative task complexity (RTC) $Q_i$.
  $Q_i$ is dimensionless quantity that characterizes computational complexity of the task. In general case $Q_i$ does not imply a numerical estimate. Necessary condition is definition of relation between initial tasks complexity;
- the algorithm of the planner - ranges the tasks in ascending order of their ratios;
- the algorithm of the planner distributes the tasks with a higher complexity - one for each machine;
- the tasks that are left are distributed gradually, after the completing of the previous ones (upon the machines are vacant again);
- last are distributed the tasks with the lowest complexity.

Unlike to the static distribution - this method allows to avoid the accumulation of errors in defining the tasks' estimation of the task relative complexity and thus - to balance the load between the machines. This allows to reduce the total time of the task performance (the initial task list).
The method can be implemented in the form of the independent program module or the program library.
The computational equipment range that can perform this method is very broad - from the multi-core PC to the cluster systems.

**Claims**

1. The load distribution scheduling method in data processing system is performed in the following order: After the start, the following actions are performed sequentially: - (1) - Identify and fetch available tasks, also when needed the 8 is performed - (8) - More tasks left in task list, (11 -Assign identified task to identified machine and (12) - Delete the assigned task from task list, with the only difference that after the (1) - Identify and fetch available tasks, sequentially performed (2) - the estimation of the task relative complexity (TRC) - (3) - sorting of the initial set of tasks with their TRC, (4) - Identify available machines, after witch goes the check of the condition (5) - the number of drivers ran - the number of available machines. If not - (6) is performed - run the machines driver, if yes - the second check is on (7) - have all drivers complete the work? If yes - the work of the method is over, if not - the work goes on, and (6) - run the computational driver - runs sequentially Driver1 to Driver N, at that, the next driver is ran after the previous has started the work, and each driver after the start makes a check (8) More tasks in task list? - if yes - (10) is performed - chose the task from the task list, if no - (9) sending a message. The message is sent to (7) - have all the drivers complete the work? - about the completion of the driver's work, after which the driver ends it's work, and after (10) - choosing of the task and the task is chosen with the help of (11) - the task is sent to the machine for the run - the task starts running then sequentially performed (12) - deleting the chosen task from the initial set of tasks and 13) - awaiting for the completion of the chosen task, thereby, after the completion of the task follows the check of the result of the task's performance. (14) - has the task complete successfully? If yes - the cycle goes on from the (8) More tasks in task list - there is a choice and performance of the next task, if no - the task performance failed -the error is analyzed - (15) - is this error critical? - if no - the error can be removed by re-running the task by another driver - the (17) is performed - the roll-back of the task, thereby, the task is set back to the list of tasks, for the further processing with the other driver - machine, and if the error is critical - (16) is performed - sending the message to (7) - have all the drivers complete the work? - about the completion of the driver's work, after which the driver ends it's work, and - during the distribution of the driver's load - their capacity is taken into account, notably - the drivers with the higher capacity get more complex tasks, the drivers with the lower capacity get less complex tasks, at that - the following tasks are spread dynamically, as far as the previous tasks are completed, in order to minimize the error of the task relative complexity ratio assessment and to reduce the total time of the task performance - the output set of tasks or the task list.

Europäisches
Patentamt

European
Patent Office

Office européen
des brevets

# EUROPEAN SEARCH REPORT

Application Number

EP 10 19 7106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/213832 A1 (SCHOFIELD BRUCE [US] ET AL) 29 September 2005 (2005-09-29) * paragraph [0008] * * paragraph [0022] - paragraph [0025] * ----- | 1 | INV. G06F9/50 |
| X | US 5 467 435 A (DOUGLAS GEORGE H [US] ET AL) 14 November 1995 (1995-11-14) * column 14, line 29 - column 15, line 40 * ----- | 1 | |
| X | US 2010/149195 A1 (FERNANDO CHANDAKA [AU] ET AL) 17 June 2010 (2010-06-17) * paragraph [0066] - paragraph [0073] * ----- | 1 | |

|  |  |  | TECHNICAL FIELDS SEARCHED (IPC) |
|---|---|---|---|
|  |  |  | G06F |

The present search report has been drawn up for all claims

| Place of search | Date of completion of the search | Examiner |
|---|---|---|
| Munich | 4 May 2011 | Milasinovic, Goran |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                            

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**

EP 10 19 7106

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2011

| Patent document cited in search report | | Publication date | Patent family member(s) | | Publication date |
|---|---|---|---|---|---|
| US 2005213832 | A1 | 29-09-2005 | NONE | | |
| US 5467435 | A | 14-11-1995 | US 5471563 A | | 28-11-1995 |
| | | | US 5471564 A | | 28-11-1995 |
| US 2010149195 | A1 | 17-06-2010 | AU 2008258132 A1 | | 01-07-2010 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2631255 A1